**Europäisches Patentamt**

**European Patent Office**

**Office européen des brevets**

(19)

(11) Veröffentlichungsnummer: **0 084 167**
**B1**

(12)

# EUROPÄISCHE PATENTSCHRIFT

(45) Veröffentlichungstag der Patentschrift:
**23.07.86**

(21) Anmeldenummer: **82112019.3**

(22) Anmeldetag: **27.12.82**

(51) Int. Cl.⁴: **C 08 F 6/00, B 01 D 3/22**

(54) Verfahren zum Entmonomerisieren von Polymeraufschlämmungen.

(30) Priorität: **09.01.82 DE 3200413**

(43) Veröffentlichungstag der Anmeldung:
**27.07.83 Patentblatt 83/30**

(45) Bekanntmachung des Hinweises auf die Patenterteilung:
**23.07.86 Patentblatt 86/30**

(84) Benannte Vertragsstaaten:
**DE FR GB IT**

(56) Entgegenhaltungen:
**DE-A-1 953 994**
**FR-A-2 401 179**
**GB-A-2 051 086**

(73) Patentinhaber: **BAYER AG, Konzernverwaltung RP Patentabteilung, D-5090 Leverkusen 1 Bayerwerk (DE)**

(72) Erfinder: **Bitners, Feliks, Paul- Klee- Strasse 90, D-5090 Leverkusen 1 (DE)**
Erfinder: **Rachwalsky, Heinz, Dr., Heinestrasse 5, D-4047 Dormagen 1 (DE)**
Erfinder: **Romatowski, Johannes, Dr., Bahnhofstrasse 43, D-4047 Dormagen (DE)**

## Beschreibung

Homo- und Copolymerisate des Acrylnitrils werden in Form von Polymeraufschlämmungen gewonnen, die wegen der unvollständigen Umsetzung noch Anteile an Monomeren enthalten, die aus ökonomischen und ökologischen Gründen aus den Polymerisaten, dem Abwasser und der Abluft entfernt und zurückgewonnen werden müssen, wobei die zugelassenen Toleranzen im Laufe der Jahre immer kleiner wurden. Entsprechend wurden die verfahrenstechnischen und apparativen Aufwendungen immer größer, um den Anforderungen zu genügen. Dennoch steht bis heute kein Verfahren zur Verfügung, das es erlaubt, die Emission von Monomeren in Abwasser und Abluft sowie den Monomerengehalt im Polymerisat auf ein vertretbares Minimum zu reduzieren und das gleichzeitig in den Verfahrensablauf der Polymerherstellung, insbesondere in den kontinuierlichen Ablauf so eingebunden werden kann, daß dessen Wirtschaftlichkeit nicht beeinträchtigt ist.

Insbesondere zur Entfernung von Acrylnitril aus wäßrigen Homo- und Copolymerisatsuspensionen sind bereits viele Vorschläge gemacht worden, die jedoch nur teilweise erfolgreich waren.

Das ein- oder mehrstufige "Stripping" bei Normaldruck oder unter leichtem Vakuum, wie es in US-PS 2 262 013 beschrieben ist, ist wegen der Nachpolymerisation unbefriedigend und wurde gemäß US-PS 3 192 189 durch Zusatz eines Chloroxisalzes verbessert. Beide Verfahren können den Monomergehalt in Abluft, Abwasser und Produkt nicht in gewünschter Weise verbessern. Außerdem wird bei dem verbesserten Verfahren der Zusatz einer weiteren Chemikalie erforderlich. Nach der GB-PS 1 048 013 wird ein Vakuumverdampfer zur Rückgewinnung nicht umgesetzten Acrylnitrils empfohlen, wobei die Acrylnitrilrückgewinnung zwischen 85 und 98 % liegt. Im besten Falle ist dabei bei einem Monomereinsatz von 10 %, bezogen auf Reaktionsmischung, einer Polymerausbeute von 82 % und einer kombinierten Acrylnitril/Methylacrylat-Rückgewinnung von 98,3 % immer noch ein Verlust von 3000 ppm Monomer festzustellen. Die DE-AS 1 570 989 empfiehlt zur Rückgewinnung von Acrylnitril und anderen Vinylmonomeren die Verwendung einer Destillationskolonne unter Einleitung von Dampf im Gegenstrom, wobei die Destillationskolonne bei einem pH von 3, einer Kopftemperatur von 90 ± 2°C und normalem Druck gefahren und der Aufschlämmung Oxalsäure oder ein Oxalat als Inhibitor zugegeben wird. Zwar bedeutet dieses Verfahren gegenüber vorgängigen Verfahren eine erhebliche Verbesserung, jedoch gehen immer noch 0,85 % Acrylnitril, das entspricht 850 ppm, verloren. Ferner darf bei der hohen Kolonnentemperatur die Verweilzeit nur gering sein, um verfärbte Produkte zu vermeiden. Nach der DE-OS 2 432 411 werden Schwefeldioxid und monomeres Acrylnitril getrennt zurückgewonnen, um eine weitere Polymerisation während der Monomerenrückgewinnung zu vermeiden. Zur Abtrennung nicht-umgesetzten Monomers wird dabei die Verwendung von höchstens drei Verdampfern, die in Reihe geschaltet sind, empfohlen, wobei die Wiedergewinnung an Monomer mindestens 96 % betragen soll. Im konkreten Fall beträgt die Ausbeute an wiedergewonnenem Monomeren 97 %, das sind bei den dort angegebenen Mengen an nichtumgesetztem Monomer etwa 14 000 ppm Acrylnitril und Methylacrylat in Produkt und Abwasser bzw. Abluft.

Eine wesentliche Verbesserung wurde erst mit der Verwendung einer Lochbodenkolonne gemäß DE-OS 2 552 683 erreicht, wobei die Polymersuspension oben auf die Kolonne aufgegeben wird, während ein Inertgas nach oben durch die Löcher im Gegenstrom zur Aufschlämmung gepreßt wird, derart, daß der Inertgasstrom so pulsiert, daß der Fluß der Aufschlämmung nach unten durch die Durchbohrungen zeitweise unterbrochen wird. Die am Boden der Kolonne abgenommene Polymersuspension enthält etwa 300 ppm Monomer. Das Verfahren hat überdies den Nachteil, daß nicht gleichzeitig Polymerfluß nach unten und Austreibung der Monomeren mit dem Inertgas stattfinden können. Eine nochmalige Verbesserung, die allerdings nur den Monomergehalt im Polymeren betrifft, gelang nach dem Verfahren der DE-OS 2 547 140, das allerdings als diskontinuierliches Verfahren wirtschaftlich uninteressant ist. Danach wird durch eine 60-minütige Behandlung des Polymeren bei 100°C ein Gehalt an Acrylnitril von 6 ppm und an Methylacrylat von 8 ppm im Polymeren erzielt. Abgesehen von der diskontinuierlichen Fahrweise und der Tatsache, daß davon die Monomerkonzentrationen in Abluft und Abwasser nicht berührt werden, führt die lange Behandlungszeit bei hoher Temperatur zu einer erheblichen Verschlechterung der Polymerqualität. Die EP-OS 2 559 empfiehlt zur Entmonomerisierung eines Styrol-Acrylnitril-Copolymerisates (Gew.-Verhältnis 70:30) eine Siebbodenkolonne, die im Gegenstrom mit Dampf bei einer Temperatur von 95 bis 150°C und einem Druck von 0,75 bis 5 bar gefahren werden soll. Dabei läßt sich Styrol im Produkt auf eine Konzentration von 100 ppm und Acrylnitril auf eine Konzentration von 5 ppm erniedrigen. Die erforderliche hohe Temperatur schadet jedoch dem Polymerisat. Über die Belastung von Abluft und Abwasser mit Monomer werden keine Aussagen gemacht.

Aus der GB-A-2 051 086 ist eine Kolonne mit perforierten Stoffaustauschböden bekannt, bei der ein wäßriger Latex über ein Wehr durch einen Fallschacht von oben nach unten fließt und Dampf von unten nach oben durch die Öffnungen der Austauschböden strömt, mit der flüchtige Monomere entfernt werden und die eine größere Standzeit aufweisen soll. Die Wehre haben eine Höhe von 15 bis 25 cm. Die Kolonne dient zur Entfernung von Styrol, von dem aber immer noch 300 bis 700 ppm im behandelten Latex verbleiben.

Um den modernen Erfordernissen gerecht zu werden ist es notwendig, die Belastung von Abluft, Abwasser und Polymerisat mit Monomer auf Werte unter 5 ppm zurückzudrängen. Dies zu erreichen ist Aufgabe der vorliegenden Erfindung, da nach bisherigem Kenntnisstand eine so weitgehende Entmonomerisierung nicht möglich war.

Es wurde nun ein Verfahren zur Entmonomerisierung von Acrylnitrilhomo- und -copolymerisatsuspensionen, die bis zu 50 Gew.-% Polymer enthalten, gefunden, bei dem die Polymersuspension von oben nach unten durch eine Kolonne mit Stoffaustauschböden, die Öffnungen aufweisen, geführt wird, und bei der von unten nach oben Dampf durch die Öffnungen der Böden im Gegenstrom durchtritt, um die Suspension zu entmonomerisieren und gleichzeitig ausreichend in Bewegung zu halten, das dadurch gekennzeichnet ist, daß jeder Boden 86 bis 98 % des Kolonnenquerschnitts einnimmt und von der verbleibenden, offenen Querschnittsfläche durch ein Wehr mit der Höhe 10 bis 50 mm getrennt ist, wobei die offene Fläche in Form eines Fallschachtes ausgebildet ist, dessen unterer Abschluß tiefer ragt als die Höhe des Wehres des nächstniederen Bodens und daß die Kolonne bei einem Druck von 0,05 bis 1,0 bar, vorzugsweise 0,1 bis 0,3 bar gefahren wird.

Die folgenden Angaben betreffen bevorzugte Ausführungsformen, die einzeln oder in Kombination angewandt werden können.

Die Anzahl der Stoffaustauschböden ist 15 bis 40, besonders bevorzugt 20 bis 35.

Der Abstand der Böden voneinander ist 250 bis 500 mm. Der Abstand der Böden kann über die gesamte Höhe der Kolonne konstant sein oder variieren.

Die Böden nehmen besonders bevorzugt 90 bis 96 % der Kolonnenquerschnittsfläche ein. Die Wehrhöhe beträgt vorzugsweise 20-30 mm.

Die Öffnungen der Böden sind runde Bohrungen.

Die Anzahl der Bohrungen pro Quadratmeter der Bodenfläche beträgt 200 bis 15000, besonders bevorzugt 400 bis 4000. Die Anzahl der Bohrungen kann von Boden zu Boden variieren; insbesondere nimmt sie zum Kopf der Kolonne zu.

Die Bohrungen nehmen 3 bis 19 %, vorzugsweise 5 bis 12 %, der Fläche der Böden ein.

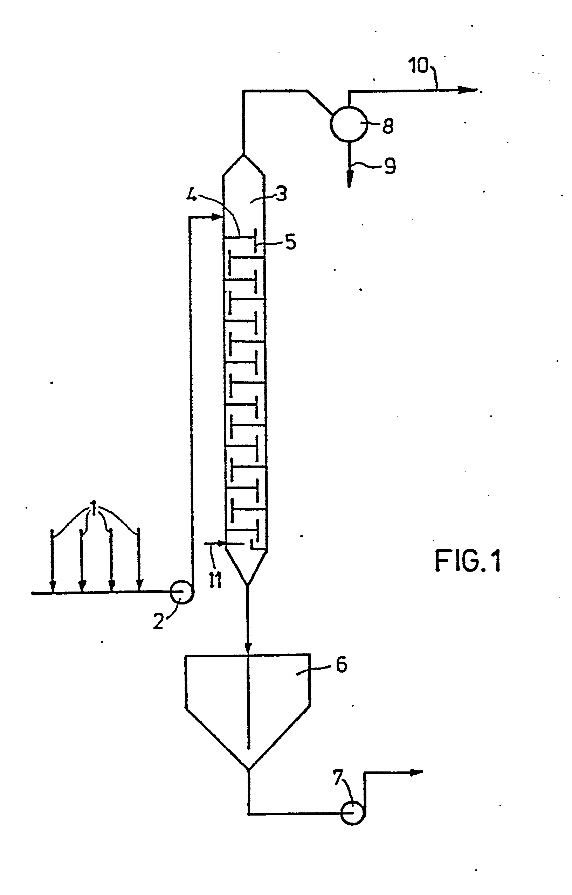

Fig. 1 zeigt die Schemazeichnung einer Anlage, in der das erfindungsgemäße Verfahren durchgeführt wird.

Dabei bezeichnen (1) die Zuläufe aus den Polymerisationskesseln (nicht gezeigt), (2) eine Förderpumpe, (3) die Kolonne mit den Böden (4), die ein Wehr und einen Fallschacht (5) aufweisen. (6) ist ein Abtauchkessel und (7) eine Breiförderpumpe. Im Dämpfekühler (8) wird das Dämpfegemisch kondensiert und über die Leitung (9) in in den Prozeß zurückgeführt. Die Abluft verläßt den Kühler über die Leitung (10) und wird einer Wäsche unterworfen. Das Waschwasser wird vorteilhafterweise ebenfalls in den Prozeß zurückgeführt, beispielsweise in der Polymerisation. Dampf wird über die Zuleitung (11) eingespeist.

## Beispiel

In einer Anlage gemäß Figur 1 werden 6,7 m³/h PAN-Brei mit ca. 30 g Acrylnitril/l, ca. 2,5 g $SO_2$/l und einem PAN-Gehalt von ca. 20 % mit einer Temperatur von ca. 55° C auf den obersten Boden einer Siebbodenkolonne mit insgesamt 28 Böden geleitet.

Bei einem Dampfverbrauch von 550 kg/h und einem Vakuum von 130 mbar, stellt sich eine Kopftemperatur von 46° C ein.

Die einzelnen Schüsse der Kolonne sind 450 mm hoch und haben einen Durchmesser von 600 mm. Die einzelnen Böden enthalten 245 Bohrungen von 8 mm Durchmesser. Die Wehrhöhe jedes Bodens beträgt 20 mm. Die Bodenfläche eines Bodens beträgt 91 % des Kolonnendurchmessers.

Die PAN-Suspension verläßt die Kolonne über ein Abtauchrohr, mit einer Temperatur von 66° C, einem Rest-Acrylnitrilgehalt < 1 mg/l und einem Rest-$SO_2$-Gehalt <15 mg/l.

Die Abluft hat einen Rest-Acrylnitrilgehalt von 7 mg/m³ und einen Rest-$SO_2$-Gehalt von 140 mg/m³ und wird über einen Waschturm an die Umgebungsluft abgegeben.

## Patentansprüche

1. Verfahren zur Entmonomerisierung von Acrylnitrilhomo- und -copolymerisatsuspensionen, die bis zu 50 Gew.-% Polymer enthalten, bei dem die Polymersuspension von oben nach unten durch eine Kolonne mit Stoffaustauschböden, die Öffnungen aufweisen, geführt wird, und bei der von unten nach oben Dampf durch die Bohrungen der Böden im Gegenstrom durchtritt, um die Suspension zu entmonomerisieren und gleichzeitig ausreichend in Bewegung zu halten, dadurch gekennzeichnet, daß jeder Boden 86 bis 98 % des Kolonnenquerschnitts einnimmt und von der verbleibenden offenen Querschnittsfläche durch ein Wehr mit der Höhe 10 bis 50 mm getrennt ist, wobei die offene Fläche in Form eines Fallschachtes ausgebildet ist, dessen unterer Abschluß tiefer ragt als die Höhe des Wehres des nächstniederen Bodens und daß die Kolonne bei einem Druck von 0,05 bis 1,0 bar gefahren wird.

2. Verfahren nach Anspruch 1, dadurch gekennzeichnet, daß der Druck 0,1 bis 0,3 bar beträgt.

3. Verfahren nach Anspruch 1, dadurch gekennzeichnet, daß die Anzahl der Stoffaustauschböden 15 bis 40 beträgt.

4. Verfahren nach Anspruch 1, dadurch gekennzeichnet, daß der Abstand der Böden voneinander 250 bis 500 mm beträgt.

5. Verfahren nach Anspruch 1, dadurch gekennzeichnet, daß die Öffnungen der Stoffaustauschböden runde Bohrungen sind, deren Anzahl pro Quadratmeter der Bodenfläche 200 bis 15000 beträgt und die 3 bis 19 % der Bodenfläche einnehmen.

6. Verfahren nach Anspruch 1, dadurch gekennzeichnet, daß die Anzahl der Stoffaustauschböden 20 bis 35 beträgt.

7. Verfahren nach Anspruch 1, dadurch gekennzeichnet, daß die Böden 90 bis 96 % der Kolonnenquerschnittsfläche einnehmen und die Wehrhöhe 20 bis 30 mm beträgt.

8. Verfahren nach Anspruch 5, dadurch gekennzeichnet, daß die Anzahl der Bohrungen 400 bis 4000 beträgt und zum Kopf der Kolonne hin zunimmt.

## Claims

1. Process for demonomerising acrylonitrile homo- and copolymer suspensions which contain up to 50% by weight of polymer, in which the polymer suspension is passed downwards through a column having mass transfer plates with openings and in which steam passes upwards in countercurrent through the openings in the plates in order to demonomerise the suspension and at the same time to keep it in motion to an adequate extent, characterised in that each plate occupies 86 to 98% of the column cross-section and is separated from the remaining open cross-sectional area by a weir of a height of 10 to 50 mm, the open area being in the form of a fall shaft of which the lower closure projects to a depth greater than the height of the weir of the next lowest plate and in that the column is operated under a pressure of 0.05 to 1.0 bar.

2. Process according to Claim 1, characterised in that the pressure is 0.1 to 0.3 bar.

3. Process according to Claim 1, characterised in that the number of the mass transfer plates is 15 to 40.

4. Process according to Claim 1, characterised in that the interval between the plates is 250 to 500 mm.

5. Process according to Claim 1, characterised in that the openings in the mass transfer plates are round bores of which the number per square metre of plate area is 200 to 15,000 and which occupy 3 to 19% of the plate area.

6. Process according to Claim 1, characterised in that the number of the lass transfer plates is 20 to 35.

7. Process according to Claim 1, characterised in that the plates occupy 90 to 96% of the cross-sectional area of the column and the height of the weir is 20 to 30 mm.

8. Process according to Claim 5, characterised in that the number of bores is 400 to 4,000 and increases towards the head of the column.

## Revendications

1. Procédé pour l'élimination des monomères de suspensions d'homo- et copolymères d'acrylonitrile qui contiennent jusqu'à 50 % en poids de polymère, dans lequel la suspension de polymère est envoyée de haut en bas à travers une colonne ayant des plateaux d'échange de matières qui comportent des ouvertures, et dans laquelle de la vapeur circule à contre-courant de bas en haut à travers les alésages des plateaux, pour éliminer les monomères de la suspension et simultanément la maintenir suffisamment en mouvement, caractérisé en ce que chaque plateau occupe 86 à 98 % de la section droite de la colonne et est séparé de la section ouverte restante par un déversoir d'une hauteur de 10 à 50 mm, la surface ouverte ayant la forme d'un puits de gravité, dont l'extrémité inférieure dépasse davantage que la hauteur du déversoir du plateau inférieur voisin et en ce que la colonne fonctionne sous une pression de 0,05 à 1,0 bar.

2. Procédé selon la revendication 1, caractérisé en ce que la pression est de 0,1 à 0,3 bar.

3. Procédé selon la revendication 1, caractérisé en ce que le nombre de plateaux d'échange de matières est de 15 à 40.

4. Procédé selon la revendication 1, caractérisé en ce que la distance des plateaux l'un de l'autre est de 250 à 500 mm.

5. Procédé selon la revendication 1, caractérisé en ce que les ouvertures des plateaux d'échange de matières sont des alésages ronds dont le nombre par mètre carré de la surface de plateau est de 200 à 1500 et qui occupent 3 à 19 % de la surface de plateau.

6. Procédé selon la revendication 1, caractérisé en ce que le nombre de plateaux d'échange de matières est de 20 à 35.

7. Procédé selon la revendication 1, caractérisé en ce que les plateaux occupent 90 à 96 % de la section droite de la colonne et la hauteur du déversoir est de 20 à 30 mm.

8. Procédé selon la revedication 5, caractérisé en ce que le nombre des alésages est de 400 à et augmente vers la tête de la colonne.

FIG.1